(19) Europäisches Patentamt
European Patent Office
Office européen des brevets

(11) EP 1 135 653 B1

(12) **EUROPEAN PATENT SPECIFICATION**

(45) Date of publication and mention
of the grant of the patent:
**23.06.2010 Bulletin 2010/25**

(21) Application number: **99915044.4**

(22) Date of filing: **25.03.1999**

(51) Int Cl.:
*F23N 1/00* (2006.01)      *G05D 23/19* (2006.01)

(86) International application number:
**PCT/US1999/006602**

(87) International publication number:
**WO 1999/049266 (30.09.1999 Gazette 1999/39)**

(54) **Apparatus for regulating heater cycles to improve forced-air heating system efficiency**

Vorrichtung zur Regelung von Heizzyklen zur Verbesserung der Effizienz von Gebläseheizungen

Appareil de régulation des cycles thermiques pour l'amélioration du rendement d'un système de chauffage à air pulsé

(84) Designated Contracting States:
**AT BE CH CY DE DK ES FI FR GB GR IE IT LI LU MC NL PT SE**

(30) Priority: **25.03.1998 US 80373**

(43) Date of publication of application:
**26.09.2001 Bulletin 2001/39**

(73) Proprietor: **Intellidyne Holdings, LLC Wantagh, NY 11793 (US)**

(72) Inventor: **HAMMER, Jack**
**Wantagh, NY 11793 (US)**

(74) Representative: **Wombwell, Francis**
**Potts, Kerr & Co.**
**15, Hamilton Square**
**Birkenhead**
**Merseyside CH41 6BR (GB)**

(56) References cited:
**US-A- 4 433 810      US-A- 4 516 720**
**US-A- 4 585 165      US-A- 4 685 616**
**US-A- 4 844 335      US-A- 5 337 955**

**Description**

**FIELD OF THE INVENTION:**

The invention relates in general to devices that consume fossil fuels (gas/oil) in the process of generating a heating medium (air) used for the purposes of heating an area requiring a temperature controlled environment (space).

It is the purpose of this invention to reduce the fuel consumption of the heating system responsible for the generation of the heating media that is being distributed throughout the space to be heated. This reduction of fuel must be accomplished without the undesirable side effect of causing temperature fluctuations, within the controlled environment beyond those which existed before the installation of the invention.

**BACKGROUND OF INVENTION:**

Forced air heating systems utilizing gas or oil fired burners as a means of heating the heating media (air) are usually comprised of the following components:

a) Thermostat; which senses the temperature within the desired space and activates the furnace's burner.

b) Burner; which generates a flame and hot-gases.

c) Heat-exchanger; the device used to transfer the flame and hot-gas temperatures to the heating media (air).

d) Heating media distribution means; usually ductwork.

e) Circulating Fan; used to force the heating media through the distribution means.

f) Items within the controlled environment having thermal mass and inertia.

Such a forced air heating system is for example disclosed in US-A-5 248 083.

A typical residential forced air heating system is usually controlled in the following manner:

When there is a need for heat within the space, the space thermostat calls for heat directly energizing the burner. Once a certain temperature is reached within the furnace's heat exchanger, the air-circulation fan is started independently using it's own built-in thermostat. The air-circulation fan forces the heating media through the distribution means and causes a heat increase within the controlled space. When the desired space temperature setpoint is reached, the space thermostat de-energizes the burner. The air-circulation fan continues to run until the temperature within the heat exchanger drops to a certain temperature (as set via the units built-in heat exchanger thermostat). The above control scheme is repeated over and over again as a means of controlling the space temperature. In a typical commercial (roof-top furnace) application, the air-circulation fan may run continuously.

In connection with heating systems, it is common knowledge that the output capacities of heating systems are usually determined by:

a) The worst case scenarios (design-loads) that the systems are expected to encounter.

b) Square footage and other architectural considerations of the facility.

c) Anticipated future expansions.

d) Expected degradation of the system output due to aging.

Anytime the demand on the heating system is less than the heating capacity of the system, the heating system is oversized. This over-sizing condition exists, within a typical properly designed system, about 85% of the time and causes the heating system to cycle the burner as the means of controlling the temperatures within the desired space.

Experimentation has shown that the temperature of the air being discharged from the furnace has a terminal (maximum) temperature that is reached, regardless of how long the burner is firing for. This terminal temperature is reached whenever the furnace is being utilized at less than maximum design load and is caused by the inability of the heat exchanger to transfer the total heat generated by the flame and hot gases to the heating media. This inability of the heat exchanger is partially due to inefficiencies of the heat exchanger itself, and partially due to the inability of the heating media to absorb all of the heat that the burner is capable of generating. Keeping the burner firing during this terminal temperature period is not productive and wasteful because the heat that is not absorbed by the heating media is expelled as hot gases, usually through the flue system.

Experimentation has also proven that additional thermal energy is available in the heat exchanger itself. This energy can be utilized during the relatively brief off period of the burner to maintain adequate heating discharge air temperatures.

Fuel savings are achieved, while maintaining the same space temperature conditions, by intelligently cycling the burner about this "terminal temperature", and by utilizing the additional heat available for extraction from the heat exchanger.

The thermal inertia and thermal storage of the items within the controlled space are used as a capacitor, of sorts, to absorb any short-term thermal transitions.

It has also been shown experimentally that while cycling the burner about the terminal temperature of the heat exchanger does lead to fuel reduction, it is necessary to not allow the discharge air temperature to drop too low. Too low, is the point at which there would be insufficient heat energy available to provide heating for the space and/or the point at which the air circulator fan would undesirably stop during a heating call. The method, the apparatus and the heating system described herein will not allow this to happen.

**OBJECTS OF THE INVENTION:**

The present invention seeks to reduce the fuel consumption of forced air (furnace) heating systems by modifying and controlling burner cycling. It is important to note that the invention works in conjunction with the heating system's control device (thermostat), and can not cause the burner to fire unless there is a specific call to do so, by the heating system's control device.

The terminal temperature of the heat exchanger and the load imposed on the heating system are determined. This data is used by a computer program to modify the cycling of the burner in order to make the most efficient use of the fuel being converted into thermal energy.

This is accomplished, by sensing the temperature of the discharge air with a sensor. The temperature information is processed by the computer program and indirectly causes all modifications of burner cycling. The terminal temperature of the heat exchanger is determined and then based upon the time taken to achieve this terminal temperature, on a burner cycle by cycle basis, the load upon the heating system is determined. When the load upon the system is determined, the amount of temperature drop allowed will also vary from burner-cycle to cycle to achieve the most desirable and efficient manner in which to control the burner.

It is therefore desirable an energy saving device capable of being used in residential commercial and industrial (thermostat) demand type control systems. This invention would be suitable for new, retrofit and original equipment manufacturer (OEM) installations. It is also the inventions intent to be simple to install and not require any programming or adjustments.

BRIEF DESCRIPTION OF THE DRAWINGS:

Figure 1 is a system diagram showing the invention in a typical forced air (furnace) heating system.

Figure 2 is a wiring diagram showing the invention installed in the wiring of a heating system.

Figure 3 is an electronic schematic of the control box of the invention.

Figure 4 is a superimposition of three graphs in the same time showing heating system responses with and without the invention.

DETAILED DESCRIPTION OF THE DRAWINGS

Conventional

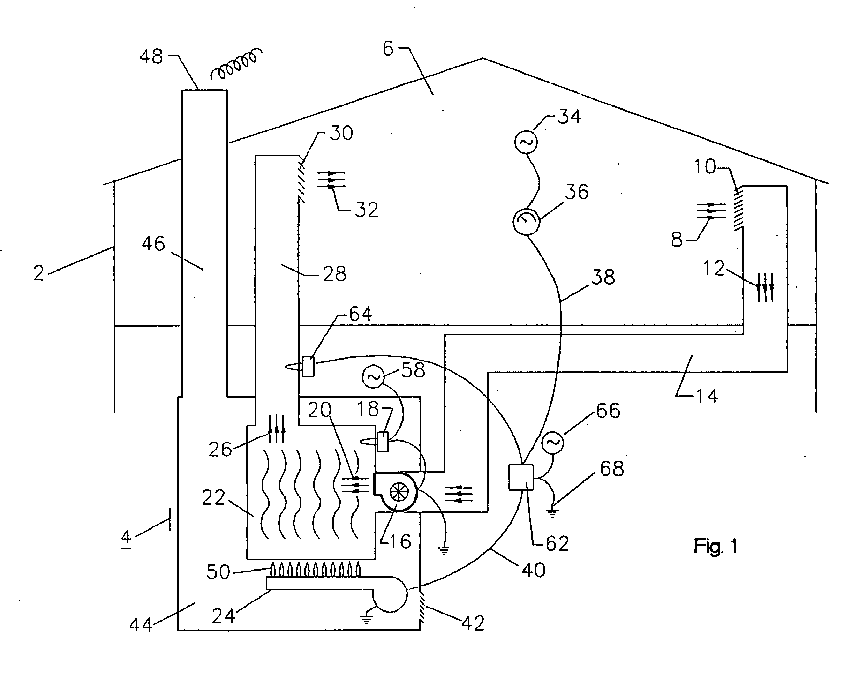

Fig. 1, shows a home 2, heated by a forced-air heating system, generally designated 4, heating space 6. Conventional elements of the forced-air heating system 4 include an air intake 10, through which air 8 and 12 is sucked into intake duct 14, by circulating fan or blower 16. In commercial installations or buildings where ventilation is an important factor, fan 16 may always be running, but in this home installation fan 16 is actuated by heat exchange thermostat 18. Air 20 is exhausted by fan 16 into heat exchanger 22, where burner 24 heats the heat exchanger 22, and air 20 is forced by pressure as output air 26 through output duct 28 through output vent 30, until the air 32 is vented into space 6.

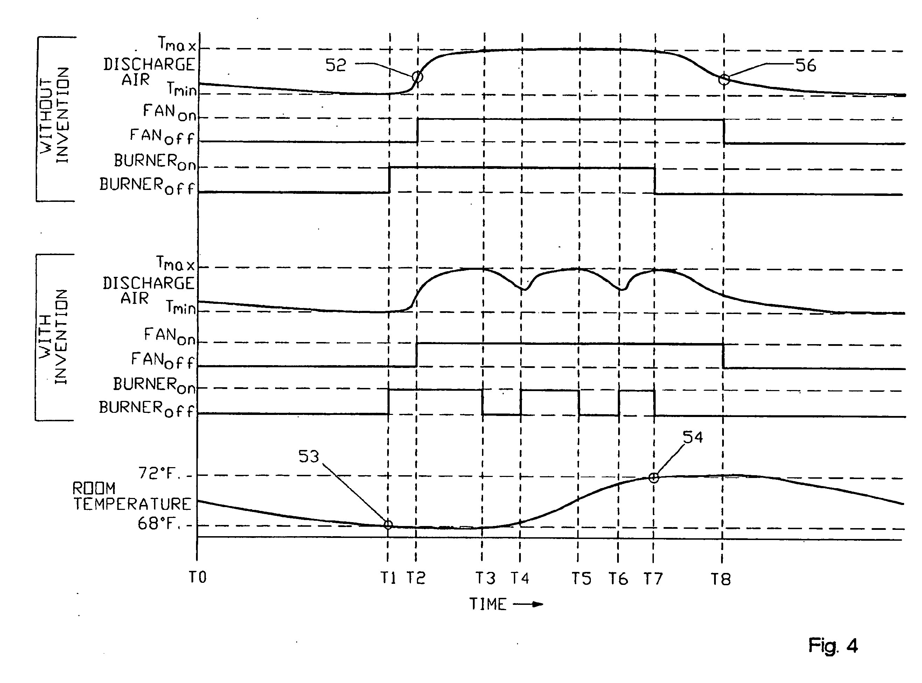

Conventionally, an electrical source 34, which is preferably low voltage, is powered through a space energy sensor, such as room thermostat 36, which monitors the temperature of the room 6 as indicated in figure 4 bottom graph. Generally, the thermostat allows a certain hysteresis between, for example a burner turn-on temperature of 20°C (68°F) (53 in Fig. 4), and a burner shut-off temperature of 22°C (72°F) (54 in Fig. 4).

Returning to figure 1, when the space temperature is within the burner firing range (Fig. 4, bottom graph between $T_1$ and $T_7$), conductor 38 and 40 provide power to burner 24. Air intakes through vent 42 to fire box 44, where it supports the combustion of burner 24. The exhaust gases exit up a flue 46 and out chimney 48.

Flame 50 heats air 20 and heat exchanger 22 until air 20 reaches a minimum fan turn-on temperature 52, as shown in figure 4. This avoids pumping drafts of cold air about space 6 before heat exchanger 22 has been sufficiently warmed to provide warm comfortable air. Once the heat exchanger has reached a sufficient fan-on temperature (52 in Fig. 4), thermostat 18 (Fig. 1) provides power from source 58, and closes the circuit to actuate fan 16, which drives air 26 through output duct 28, where it is vented as warm air 32 into space 6.

As long (Fig. 4, top graph between $T_2$ and $T_8$) as the heat exchanger air temperature, measured by sensor 18, remains above a minimum fan shut-off temperature (Fig. 4, top graph at 56), the fan will remain running. The burner continues to fire until room 6 (Fig. 1) temperature is at the thermostat maximum 54 (Fig. 4), at which point thermostat 36 (Fig. 1) interrupts the flow from power source 34 to burner 24, so that flame 50 is extinguished. However, heat exchanger 22 remains hot, and so fan 16 continues to run until the temperature sensed by sensor 18 falls below a minimum fan operation temperature as shown in Fig. 4 at 56.

Invention

A control box 62, interposed between conductors 38 and 40, connected to output air temperature sensor 64, senses the temperature of air 26 as it exits the heat exchanger. A power source 66 and a ground 68 complete the connections toward 62.

As shown in figure 4, in the graph labeled WITHCUT INVENTION, a call from thermostat 36 immediately causes the burner to turn on. Output air (26 in Fig. 1) begins heating slightly through convection until heat exchanger temperature sensor 18 reaches its fan turn-on temperature, at which point fan 16 goes from a off to an on state at T2 (Fig. 4). The temperature of the output or discharge air begins to rise, but eventually at T3 approaches a plateau, beyond which it does not heat. This is the thermal maximum at which the heat of the heat exchanger has saturated the ability of the air passing through it to absorb heat. Thus, during the entire time T3 to T7, burner 24 of figure 1 is producing heat, raising the temperature of the heat exchanger beyond the point at which it can increase the temperature of the air flowing past it. This is a waste of energy. Fuel is being.expended without any commensurate gain in the temperature of air 20, 26, or 32 (Fig. 1).

As shown in figure 4, in the graph labeled WITH INVENTION, output air temperature sensor 64 (shown in figure 1) monitors the temperature of the discharge air 26. In figure 4, WITH INVENTION, the burner turns on at T1 and remains on through T2, at which time the fan turns on, raising the temperature on the discharge air. Before T3, the discharge air reaches a $T_{max}$. The $T_{max}$ can be determined by :

making a plurality of measurements of a temperature of air output from the heat exchanger;

recording a first start time T1, at which the burner turns on;

observing the temperature measurement after the burner has turned on;

initializing a confirmation interval when two or more consecutive temperatures at sensor 64's measurements of the discharge air are substantially the same; and

observing the discharge air temperature measurement either during or at the end of confirmation interval T3.

If during, the confirmation interval, the temperature rises, the system will go back to observing consecutive temperature measurements until two or more are the same.

If the observation is taken at the end of the confirmation interval and it is not the same, the confirmation interval will again be de-initialized and consecutive observations will continue to be made.

If the temperature has remained at plateau of $T_{max}$ for the duration of the confirmation interval, the burner is shut off at T3. Thus, the burner no longer attempts to heat heat exchanger 22 past its maximum thermal transfer capacity. Thus, fuel is being saved for the entire interrupt interval between T3-T4.

The cycle repeats itself through interrupt interval T5 to T6, and again through interrupt interval T7 to T8, by which time room 6 temperature has exceeded the maximum temperature at which the thermostat burner call is made 54 in Fig. 4, and thermostat 36 ends its burner call. This cycle will occur repeatedly with each burner call.

It is desirable to limit the temperature fall of the discharge air in order to keep the fan on and to maintain a useful heat output, typically 43°C (110 degrees F).

It is therefore helpful to calibrate the control box 64 to inform it at what temperature of output air energy sensor 64, fan 16 shuts off. To so calibrate, an installer:

initiates a burner call by adjusting thermostat 36;

waits for heat exchanger 22 to sufficiently heat to cause fan 16 to turn on;

waits for the burner call to end;

waits for the temperature of heat exchanger 22 to fall sufficiently to reach fan 16 turn-off temperature at thermostat 18;

presses calibration button 70 on control box 62;

thereby calibrates the box by inputting the output air energy sensor value corresponding to the output air 26 temperature when fan 16 turns off.

Having thus calibrated fan turn off temperature 56 of Figure 4, it is possible to keep the discharge air temperature above $T_{min}$ by restarting the burner at T4, when the discharge air temperature is about midway between $T_{max}$ and $T_{min}$.

However, the preferred method of the present invention is to measure the thermal inertia of the heat exchanger between T2 and T3, and thereby extrapolate when to stop the burner interrupt at T4.

We will define this time between T2 and T3 as the elapsed time. Elapsed time may begin to be counted at any time after T1, but it is preferred to start the elapsed time at T2, since the fan turn-on creates a more linear relationship between temperature increase and heat exchanger thermal inertia, between T2 and T3, which is more reproducible and more independent of any external influences. Thus, in claim 1, line 5, claiming "recording a first start time at a time when the burner turns on" uses the dictionary definition of "at" as "on or near". We hereby define "near" as extending at least to the time of fan turn-on and being preferably substantially coincident with the fan turn-on. Of course, where the fan is always on, "at" will be some interval on or near the burner turn-on. The more thermal inertia that the heat exchanger 22 has, the longer it will take for discharge air temperature after T3 to approach $T_{min}$.

This interval is remarkably independent of the thermal load on room 6. The turn-off intervals T3-T4 and T5-T6 can be remarkably reproducible without further reference to discharge air temperature. Once this elapsed time T2-T3 is known, T3-T4 will be remarkably consistent to T5-T6; even if T5-T6 is taken as a percentage of T4-T5.

Thus, the burner interrupt interval can be calibrated either at each cycle or at each burner call.

Interupt interval T3-T4 is therefore desirably a function of the elapsed time from T2 to T3. Preferably, the function is a percentage of the elapsed time. Optimally, the function is optimized at a critical value of 20%.

Alternatively, the interupt interval may be controlled through temperature measurement, at which the discharge temperature $T_p$ = 25 - the square root of the elapsed time in seconds. $T_p$ is measured in degrees fahrenheit. The minimum $T_p$ is greater than or equal to zero.

As a third alternative, once the fan shut-off temperature has been recorded, a temperature margin can be added to the fan shut-off temperature and the sum of the temperature margin and the fan shut-off temperature is an interupt interval termination temperature.

Thus, if the output air temperature, during an interupt interval, is less than the interupt interval termination temperature, the invention ends the interupt interval.

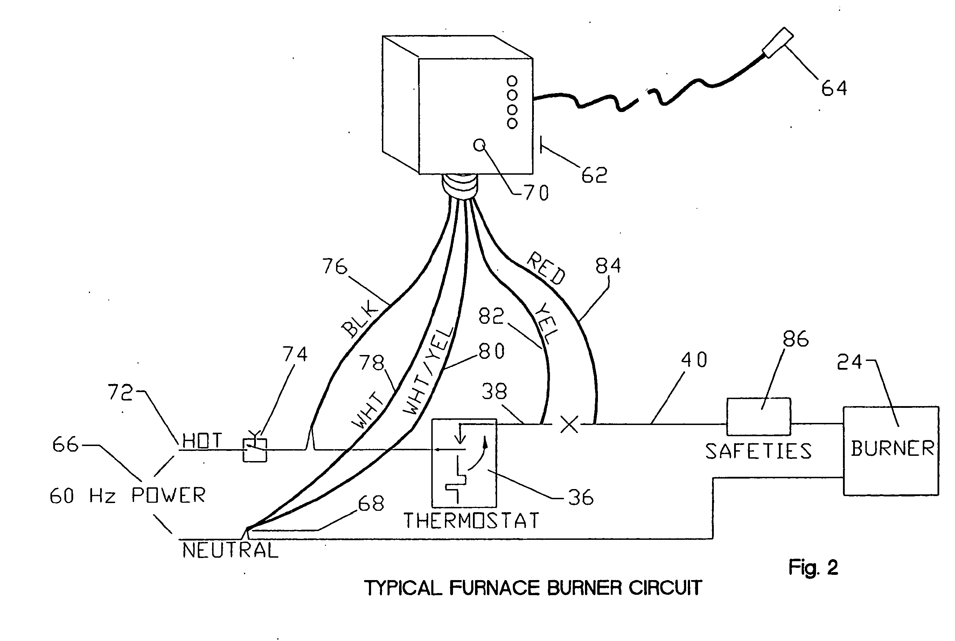

Figure 2 shows how to wire the invention 62 into a typical furnace burner circuit. 60Hz Power 66 is supplied through the hot lead 72, through master furnace switch 74, on the switched side of which is connected black wire 76, which connects to control box 62 and provides hot power thereto.

White 78 and white/yellow 80 leads are attached to power neutral line at connection 68. On the other side from black 76 of thermostat 36, lead 38 is broken and lead 38 is connected to yellow wire 82, from which it returns as red wire 84, and is connected to lead 40, through burner safety 86, to burner 24.

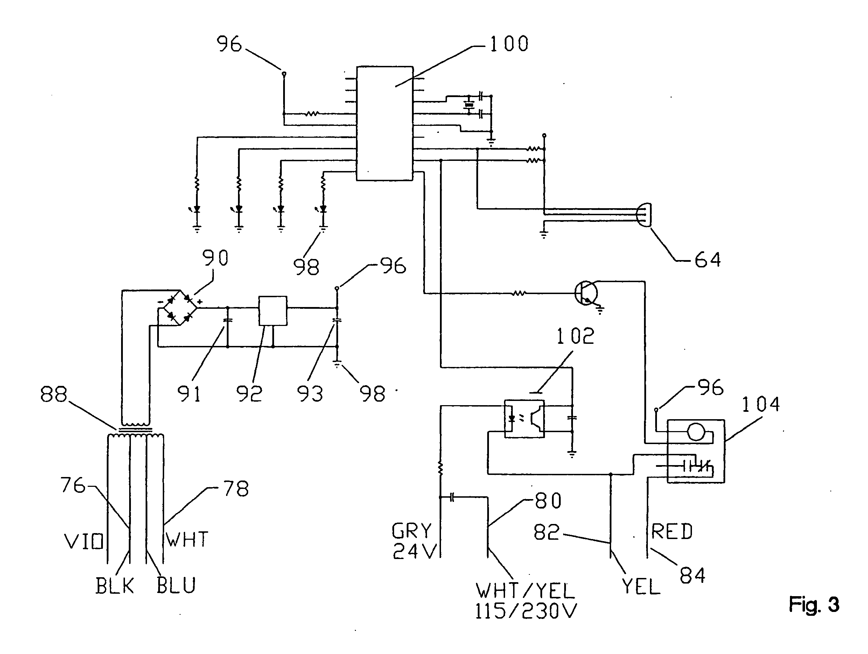

Figure 3 shows the circuit inside control box 62. Power is supplied on the hot side by black wire 76, and on the neutral side by white wire 78. These are transformed at transformer 88, and rectified by ring diodes 90, where they are transmitted through power regulating elements 91, 92, and 93, to the output as control box power supply at points 96, which is 5 volts plus, and 98 which is ground. Processor 100, preferably a microprocessor, in this case a 16C556, but which may be any functional equivalent, receives input from temperature sensor 64. White/yellow wire 80 provides 230, 115 or 24 volt power to isolator 102, which provides a sensor that can signal a wide range of voltage inputs, to handle many various voltages that are often used on thermostats. Typically this varies, with voltages between 12 volts and 240 volts. Switching circuit 104 responds to the commands of microprocessor 100, as described above, to switch on and off the continuity between thermostatically switched power supply yellow wire 82 and red wire 84.

## Claims

1. A method of regulating cycles in a forced air heating system having a burner (24), a heat exchanger (22), and a fan (16), said method comprising the steps of:

   making a plurality of measurements of a temperature of air output from the heat exchanger;
   observing a temperature measurement of the plurality, after the burner has turned on;
   initializing a confirmation interval when two consecutive temperature measurements of the plurality are substantially the same;
   observing a temperature measurement of the plurality at an end of the confirmation interval;
   if the temperature measurement at the end of the confirmation interval is substantially the same as the two consecutive temperature measurements:

       recording said same temperature measurement as a steady state temperature; and
       interrupting firing of the burner for an interrupt interval;

   said interrupt interval being insufficient to allow the heat exchanger's temperature to fall below a useful value.

2. A method according to claim 1 in which the interrupt interval is determined by the steps of:

   recording a first start time;
   recording a first stop time; and
   determining an elapsed time from the first start time to the first stop time;
   said interrupt interval being a function of the elapsed time from the first start time to the first stop time.

3. A method according to claim 2 in which the first start time is at or after turning on of the burner.

4. A method according to claim 3 in which the first start time is at turning on of the fan.

5. A method according to claim 1 wherein, if the temperature measurement at the end of the confirmation interval is substantially different from the two consecutive temperature measurements:

further observing temperature measurements of the plurality;

initializing a confirmation interval when two consecutive temperature measurements of the plurality are substantially the same;

observing a temperature measurement of the plurality at an end of the confirmation interval;

if the temperature measurement at the end of the confirmation interval is substantially the same as the two consecutive temperature measurements:

recording a first stop time,

determining an elapsed time from the first start time to the first stop time,

recording said same temperature measurement as a steady state temperature,

interrupting firing of the burner for an interrupt interval;

said interrupt interval being a function of the elapsed time from the first start time to the first stop time.

6. A method according to claim 1, which , after the interrupt interval, further comprises the steps of:

recording a new first start time at a new time when the burner turns on;

initializing a new confirmation interval when a new two consecutive temperature measurements of the plurality are substantially the same;

observing a new temperature measurement of the plurality at an end of the new confirmation interval;

if the new temperature measurement at the end of the new confirmation interval is substantially the same as the new two consecutive temperature measurements:

recording a new first stop time,

determining a new elapsed time from the new first start time to the new first stop time,

recording said same new temperature measurement as a new steady state temperature,

interrupting firing of the burner for a new interrupt interval;

said new interrupt interval being the function of the new elapsed time from the new first start time to the new first stop time.

7. A method according to claim 6 wherein, if the temperature measurement at the end of the confirmation interval is substantially different from the two consecutive temperature measurements:

further observing temperature measurements of the plurality;

initializing a confirmation interval when two consecutive temperature measurements of the plurality are substantially the same;

observing a temperature measurement of the plurality at an end of the confirmation interval;

if the temperature measurement at the end of the confirmation interval is substantially the same as the two consecutive temperature measurements:

recording a first stop time,

determining an elapsed time from the first start time to the first stop time,

recording said same temperature measurement as a steady state temperature,

interrupting firing of the burner for an interrupt interval;

said interrupt interval being a function of the elapsed time from the first start time to the first stop time.

8. A method according to claims 2, 5, 6 or 7 in which the function is a percentage of the elapsed time.

9. A method according to claim 8 in which the percentage is optimized at substantially 20%.

10. A method according to claims 2, 5, 6 or 7 in which the function is a temperature value derived from the elapsed time.

11. A method according to claim 10 in which the temperature value is preferably:

$$0 <= T_P = 25 - L_t^{1/2}$$

where:

$T_P$ is the preferred temperature value in degrees Farenheight, and
$L_t$ is the elapsed time in seconds.

12. A method according to claim 1 comprising the further steps of:

determining an air output temperature at which a circulating fan shuts off to define a fan shut-off temperature;

recording said fan shut-off temperature;

adding a temperature margin to the fan shut-off temperature, the sum of which is an interrupt interval termination temperature.

13. A method according to claim 12 in which, if

an output air temperature, during the interrupt interval, is less than the interrupt interval termination temperature,
then
ending the interrupt interval.

14. Apparatus for regulating burner run cycles in a forced air heating system, said apparatus comprising:

　　sensor means (64) for measuring temperature of air output from a heat exchanger (22);
　　electronic circuit means (62) for:

　　　　recording a first start time at a time when the burner (24) turns on;
　　　　monitoring the sensor means (64);
　　　　initializing a confirmation interval when two consecutive temperature measurements of the plurality are substantially the same;
　　　　observing a temperature measurement at an end of the confirmation interval;

　　if the temperature measurement at the end of the confirmation interval is substantially the same as the two consecutive temperature measurements:

　　　　recording a first stop time,
　　　　determining an elapsed time from the first start time to the first stop time,
　　　　recording said same temperature measurement as a steady state temperature,
　　　　interrupting firing of the burner for an interrupt interval.

15. A forced air heating system having:

　　a burner (24);
　　a heat exchanger (22);
　　a heat exchanger air output;
　　a space energy value sensor (36);
　　a heat exchanger energy value sensor (18);
　　a circulating air pump (16);

and comprising:

　　sensor means (64) for measuring temperature of air output from a heat exchanger (22);
　　electronic circuit means (62) for:

　　　　recording a first start time at a time when the burner turns on;
　　　　monitoring the sensor means;
　　　　initializing a confirmation interval when two consecutive temperature measurements of the plurality are substantially the same;
　　　　observing a temperature measurement at an end of the confirmation interval;

　　if the temperature measurement at the end of the confirmation interval is substantially the same as the two consecutive temperature measurements:

　　　　recording a first stop time,
　　　　determining an elapsed time from the first start time to the first stop time,
　　　　recording said same temperature measurement as a steady state temperature,

　　interrupting firing of the burner for an interrupt interval.

16. Heating system according to claim 15 further having the burner (24) controlled by means for conducting from the space energy value sensor (36);
further comprising:

　　means (38) for sensing a signal from the space energy value sensor (36); and
　　a switched break in the conducting means controlled by the electronic circuit means (62).

17. Heating system according to claim 15 in which the signal sensing means is an apparatus with a wide range of voltage inputs.

18. Heating system according to claim 17 in which the wide range of voltage inputs is between 24 VAC and 240 VAC.

19. Heating system according to claim 18 in which the signal sensing means includes an optoisolator (102).

20. Heating system according to claim 15 in which the electronic circuit means comprises a microprocessor (100).

**Patentansprüche**

1. Verfahren zum Regeln von Zyklen in einem Gebläseheizsystem mit einem Brenner (24), einem Wärmetauscher (22) und einem Gebläse (16), wobei das Verfahren die folgenden Schritte umfasst:

　　Durchführen einer Vielzahl von Messungen einer Temperatur einer aus dem Wärmetauscher ausgegebenen Luft;
　　Beobachten einer Temperaturmessung der Vielzahl, nachdem der Brenner eingeschaltet hat;
　　Initialisieren eines Bestätigungsintervalls, wenn zwei aufeinander folgende Temperaturmessungen der Vielzahl im Wesentlichen gleich sind;
　　Beobachten einer Temperaturmessung der Vielzahl an einem Ende des Bestätigungsintervalls;

wenn die Temperaturmessung am Ende des Bestätigungsintervalls im Wesentlichen dieselbe wie die zwei aufeinander folgenden Temperaturmessungen ist:

Aufzeichnen derselben Temperaturmessung als stationäre Temperatur; und Unterbrechen des Befeuerns des Brenners für ein Unterbrechungsintervall;

wobei das Interbrechungsintervall unzureichend ist, um zu ermöglichen, dass die Temperatur des Wärmetauschers unter einen brauchbaren Wert fällt.

**2.** Verfahren nach Anspruch 1, wobei das Unterbrechungsintervall durch die folgenden Schritte bestimmt wird:

Aufzeichnen einer ersten Startzeit; Aufzeichnen einer ersten Stoppzeit; und Bestimmen einer abgelaufenen Zeit von der ersten Startzeit bis zur ersten Stoppzeit;

wobei das Unterbrechungsintervall eine Funktion der abgelaufenen Zeit von der ersten Startzeit bis zur ersten Stoppzeit ist.

**3.** Verfahren nach Anspruch 2, wobei die erste Startzeit bei oder nach dem Einschalten des Brenners liegt.

**4.** Verfahren nach Anspruch 3, wobei die erste Startzeit beim Einschalten des Gebläses liegt.

**5.** Verfahren nach Anspruch 1, wobei, wenn die Temperaturmessung am Ende des Bestätigungsintervalls von den zwei aufeinander folgenden Temperaturmessungen im Wesentlichen verschieden ist:

weiteres Beobachten von Temperaturmessungen der Vielzahl; Initialisieren eines Bestätigungsintervalls, wenn zwei aufeinander folgende Temperaturmessungen der Vielzahl im Wesentlichen gleich sind; Beobachten einer Temperaturmessung der Vielzahl an einem Ende des Bestätigungsintervalls; wenn die Temperaturmessung am Ende des Bestätigungsintervalls im Wesentlichen dieselbe wie die zwei aufeinander folgenden Temperaturmessungen ist:

Aufzeichnen einer ersten Stoppzeit, Bestimmen einer abgelaufenen Zeit von der ersten Startzeit bis zur ersten Stoppzeit, Aufzeichnen derselben Temperaturmessung als stationäre Temperatur,

Unterbrechen des Befeuerns des Brenners für ein Unterbrechungsintervall;

wobei das Unterbrechungsintervall eine Funktion der abgelaufenen Zeit von der ersten Startzeit bis zur ersten Stoppzeit ist.

**6.** Verfahren nach Anspruch 1, das nach dem Unterbrechungsintervall ferner die folgenden Schritte umfasst:

Aufzeichnen einer neuen ersten Startzeit zu einem neuen Zeitpunkt, wenn der Brenner einschaltet; Initialisieren eines neuen Bestätigungsintervalls, wenn zwei neue aufeinander folgende Temperaturmessungen der Vielzahl im Wesentlichen gleich sind; Beobachten einer neuen Temperaturmessung der Vielzahl an einem Ende des neuen Bestätigungsintervalls; wenn die neue Temperaturmessung am Ende des neuen Bestätigungsintervalls im Wesentlichen dieselbe wie die zwei neuen aufeinander folgenden Temperaturmessungen ist:

Aufzeichnen einer neuen ersten Stoppzeit, Bestimmen einer neuen abgelaufenen Zeit von der neuen ersten Startzeit bis zur neuen ersten Stoppzeit, Aufzeichnen derselben neuen Temperaturmessung als neue stationäre Temperatur, Unterbrechen des Befeuerns des Brenners für ein neues Unterbrechungsintervall;

wobei das neue Unterbrechungsintervall die Funktion der neuen abgelaufenen Zeit von der neuen ersten Startzeit bis zur neuen ersten Stoppzeit ist.

**7.** Verfahren nach Anspruch 6, wobei, wenn die Temperaturmessung am Ende des Bestätigungsintervalls von den zwei aufeinander folgenden Temperaturmessungen im Wesentlichen verschieden ist:

weiteres Beobachten von Temperaturmessungen der Vielzahl; Initialisieren eines Bestätigungsintervalls, wenn zwei aufeinander folgende Temperaturmessungen der Vielzahl im Wesentlichen gleich sind; Beobachten einer Temperaturmessung der Vielzahl an einem Ende des Bestätigungsintervalls; wenn die Temperaturmessung am Ende des Bestätigungsintervalls im Wesentlichen dieselbe wie die zwei aufeinander folgenden Temperaturmessungen ist:

Aufzeichnen einer ersten Stoppzeit,

Bestimmen einer abgelaufenen Zeit von der ersten Startzeit bis zur ersten Stoppzeit, Aufzeichnen derselben Temperaturmessung als stationäre Temperatur, Unterbrechen des Befeuerns des Brenners für ein Unterbrechungsintervall;

wobei das Unterbrechungsintervall eine Funktion der abgelaufenen Zeit von der ersten Startzeit bis zur ersten Stoppzeit ist.

8. Verfahren nach den Ansprüchen 2, 5, 6 oder 7, wobei die Funktion ein Prozentsatz der abgelaufenen Zeit ist.

9. Verfahren nach Anspruch 8, wobei der Prozentsatz bei im Wesentlichen 20 % optimiert ist.

10. Verfahren nach den Ansprüchen 2, 5, 6 oder 7, wobei die Funktion ein Temperaturwert ist, der von der abgelaufenen Zeit abgeleitet ist.

11. Verfahren nach Anspruch 10, wobei der Temperaturwert vorzugsweise:

$$0 <= T_p = 25 - L_t^{1/2}$$

ist, wobei:

$T_p$ der bevorzugte Temperaturwert in Grad Fahrenheit ist, und
$L_t$ die abgelaufene Zeit in Sekunden ist.

12. Verfahren nach Anspruch 1, das die folgenden weiteren Schritte umfasst:

Bestimmen einer Luftausgangstemperatur, bei der ein Umluftgebläse abschaltet, um eine Gebläseabschalttemperatur zu definieren; Aufzeichnen der Gebläseabschalttemperatur; Addieren einer Temperaturtoleranz zur Gebläseabschalttemperatur, deren Summe eine Unterbrechungsintervall- Beendungstemperatur ist.

13. Verfahren nach Anspruch 12, wobei, wenn eine Ausgangslufttemperatur während des Unterbrechungsintervalls geringer ist als die Unterbrechungsintervall-Beendungstemperatur, dann Beenden des Unterbrechungsintervalls.

14. Vorrichtung zum Regeln von Brennerlaufzyklen in einem Gebläseheizsystem, wobei die Vorrichtung umfasst:

eine Sensoreinrichtung (64) zum Messen der Temperatur einer aus einem Wärmetauscher (22) ausgegebenen Luft;
eine elektronische Schaltungseinrichtung (62) zum:

Aufzeichnen einer ersten Startzeit zu einem Zeitpunkt, zu dem der Brenner (24) einschaltet;
Überwachen der Sensoreinrichtung (64);
Initialisieren eines Bestätigungsintervalls, wenn zwei aufeinander folgende Temperaturmessungen der Vielzahl im Wesentlichen gleich sind;
Beobachten einer Temperaturmessung an einem Ende des Bestätigungsintervalls;

wenn die Temperaturmessung am Ende des Bestätigungsintervalls im Wesentlichen dieselbe wie die zwei aufeinander folgenden Temperaturmessungen ist:

Aufzeichnen einer ersten Stoppzeit, Bestimmen einer abgelaufenen Zeit von der ersten Startzeit bis zur ersten Stoppzeit, Aufzeichnen derselben Temperaturmessung als stationäre Temperatur, Unterbrechen des Befeuerns des Brenners für ein Unterbrechungsintervall.

15. Gebläseheizsystem mit:

einem Brenner (24);
einem Wärmetauscher (22);
einem Wärmetauscher-Luftausgang;
einem Raumenergiewertsensor (36);
einem Wärmetauscher-Energiewertsensor (18);
einer Umluftpumpe (16);

und mit:

einer Sensoreinrichtung (64) zum Messen der Temperatur einer aus einem Wärmetauscher (22) ausgegebenen Luft;
einer elektronischen Schaltungseinrichtung (62) zum:

Aufzeichnen einer ersten Startzeit zu einem Zeitpunkt, zu dem der Brenner einschaltet;
Überwachen der Sensoreinrichtung;
Initialisieren eines Bestätigungsintervalls, wenn zwei aufeinander folgende Temperaturmessungen der Vielzahl im Wesentlichen gleich sind;
Beobachten einer Temperaturmessung an einem Ende des Bestätigungsintervalls;

wenn die Temperaturmessung am Ende des Bestätigungsintervalls im Wesentlichen dieselbe wie die zwei aufeinander folgenden Temperaturmessungen ist:

Aufzeichnen einer ersten Stoppzeit, Bestimmen einer abgelaufenen Zeit von der ersten Startzeit bis zur ersten Stoppzeit, Aufzeichnen derselben Temperaturmessung als stationäre Temperatur, Unterbrechen des Befeuerns des Brenners für ein Unterbrechungsintervall.

16. Heizsystem nach Anspruch 15, bei dem ferner der Brenner (24) durch eine Einrichtung zum Leiten vom Raumenergiewertsensor (36) gesteuert wird; wobei es ferner umfasst:

eine Einrichtung (38) zum Erfassen eines Signals vom Raumenergiewertsensor (36); und eine geschaltete Unterbrechung in der Leitungseinrichtung, die durch die elektronische Schaltungseinrichtung (62) gesteuert wird.

17. Heizsystem nach Anspruch 15, wobei die Signalerfassungseinrichtung eine Vorrichtung mit einem breiten Bereich von Spannungseingaben ist.

18. Heizsystem nach Anspruch 17, wobei der breite Bereich von Spannungseingaben zwischen 24 V Wechselspannung und 240 V Wechselspannung liegt.

19. Heizsystem nach Anspruch 18, wobei die Signalerfassungseinrichtung einen Optoisolator (102) umfasst.

20. Heizsystem nach Anspruch 15, wobei die elektronische Schaltungseinrichtung einen Mikroprozessor (100) umfasst.

**Revendications**

1. Procédé pour réguler des cycles dans un système de chauffage à air forcé ayant un brûleur (24), un échangeur de chaleur (22) et un ventilateur (16), ledit procédé comprenant les étapes suivantes :

réaliser une pluralité de mesures d'une température de sortie d'air de l'échangeur de chaleur ; observer une mesure de température de la pluralité, après que le brûleur a été allumé ; initialiser un intervalle de confirmation lorsque deux mesures de température consécutives de la pluralité sont sensiblement identiques ; observer une mesure de température de la pluralité à la fin de l'intervalle de confirmation ;

si la mesure de température à la fin de l'intervalle de confirmation est sensiblement le même que les deux mesures de température consécutives :

enregistrer ladite même mesure de température en tant que température stationnaire ; et interrompre la chauffe du brûleur pendant un intervalle d'interruption ;

ledit intervalle d'interruption étant insuffisant pour permettre à la température de l'échangeur de chaleur de chuter au-dessous d'une valeur utile.

2. Procédé selon la revendication 1, dans lequel l'intervalle d'interruption est déterminé par les étapes suivantes :

enregistrer un premier temps de démarrage ; enregistrer un premier temps d'arrêt ; et déterminer un temps écoulé depuis le premier temps de démarrage jusqu'au premier temps d'arrêt ;

ledit intervalle d'interruption dépendant du temps écoulé depuis le premier temps de démarrage jusqu'au premier temps d'arrêt.

3. Procédé selon la revendication 2, dans lequel le premier temps de démarrage a lieu au moment de ou après la mise en marche du brûleur.

4. Procédé selon la revendication 3, dans lequel le premier temps de démarrage a lieu au moment de la mise en marche du ventilateur.

5. Procédé selon la revendication 1, dans lequel, si la mesure de température à la fin de l'intervalle de confirmation est sensiblement différente des deux mesures de température consécutives :

continuer à observer les mesures de température de la pluralité ; initialiser un intervalle de confirmation lorsque les deux mesures de température consécutives de la pluralité sont sensiblement les mêmes ; observer une mesure de température de la pluralité à la fin de l'intervalle de confirmation ; si la mesure de température à la fin de l'intervalle de confirmation est sensiblement la même que les deux mesures de température consécutives :

enregistrer un premier temps d'arrêt, déterminer un temps écoulé depuis le premier temps de démarrage jusqu'au premier temps d'arrêt,

enregistrer ladite même mesure de température en tant que température stationnaire, interrompre la chauffe du brûleur pendant un intervalle d'interruption ;

ledit intervalle d'interruption dépendant du temps écoulé depuis le premier temps de démarrage jusqu'au premier temps d'arrêt.

6. Procédé selon la revendication 1, qui, après l'intervalle d'interruption, comprend en outre les étapes suivantes :

enregistrer un nouveau premier temps de démarrage une nouvelle fois lorsque le brûleur est en marche ;
initialiser un nouvel intervalle de confirmation lorsque deux nouvelles mesures de température consécutives de la pluralité sont sensiblement les mêmes ;
observer une nouvelle mesure de température de la pluralité à la fin du nouvel intervalle de confirmation ;
si la nouvelle mesure de température à la fin du nouvel intervalle de confirmation est sensiblement la même que les deux nouvelles mesures de température consécutives :

enregistrer un nouveau premier temps d'arrêt,
déterminer un nouveau temps écoulé depuis le nouveau premier temps de démarrage jusqu'au nouveau premier temps d'arrêt,
enregistrer ladite même nouvelle mesure de température en tant que nouvelle température stationnaire,
interrompre la chauffe du brûleur pendant un nouvel intervalle d'interruption ;

ledit nouvel intervalle d'interruption dépendant du nouveau temps écoulé depuis le nouveau premier temps de démarrage jusqu'au nouveau premier temps d'arrêt.

7. Procédé selon la revendication 6, dans lequel, si la mesure de température à la fin de l'intervalle de confirmation est sensiblement différente des deux mesures de température consécutives :

continuer à observer des mesures de température de la pluralité ;
initialiser un intervalle de confirmation lorsque les deux mesures de température consécutives de la pluralité sont sensiblement les mêmes ;
observer une mesure de température de la pluralité à la fin de l'intervalle de confirmation ;
si la mesure de température à la fin de l'intervalle de confirmation est sensiblement la même que les deux mesures de température consécutives :

enregistrer un premier temps d'arrêt,
déterminer un temps écoulé depuis le premier temps de démarrage jusqu'au premier temps d'arrêt,
enregistrer ladite même mesure de température en tant que température stationnaire,
interrompre la chauffe du brûleur pendant un intervalle d'interruption ;

ledit intervalle d'interruption dépendant du temps écoulé depuis le premier temps de démarrage jusqu'au premier temps d'arrêt.

8. Procédé selon la revendication 2, 5, 6 ou 7, dans lequel la fonction est un pourcentage du temps écoulé.

9. Procédé selon la revendication 8, dans lequel le pourcentage est optimisé à sensiblement 20%.

10. Procédé selon la revendication 2, 5, 6 ou 7, dans lequel la fonction est une valeur de température dérivée du temps écoulé.

11. Procédé selon la revendication 10, dans lequel la valeur de température est de préférence :

$$0 < = T_P + 25 - L_t^{1/2}$$

où :

$T_p$ est la valeur de température préférée en degrés Farenheight,
et
$L_t$ est le temps écoulé en secondes.

12. Procédé selon la revendication 1, comprenant les étapes supplémentaires suivantes :

déterminer une température de sortie d'air à laquelle un ventilateur brasseur d'air s'éteint pour déterminer une température d'arrêt de ventilateur ;
enregistrer ladite température d'arrêt de ventilateur ;
ajouter une marge de température à la température d'arrêt de ventilateur, dont la somme est une température de fin d'intervalle d'interruption.

13. Procédé selon la revendication 12, dans lequel, si une température d'air de sortie, pendant l'intervalle d'interruption, est inférieure à la température de fin d'intervalle d'interruption, ensuite terminer l'intervalle d'interruption.

14. Appareil pour régler des cycles de fonctionnement de brûleur dans un système de chauffage à air forcé, ledit appareil comprenant :

  des moyens de capteur (64) pour mesurer la température de la sortie d'air d'un échangeur de chaleur (22) ;
  des moyens de circuit électronique (62) pour :

    enregistrer un premier temps de démarrage à la fois lorsque le brûleur (24) fonctionne ;
    surveiller les moyens de capteur (64) ;
    initialiser un intervalle de confirmation lorsque deux mesures de température consécutives de la pluralité sont sensiblement les mêmes ; observer une mesure de température à la fin de l'intervalle de confirmation ;
    si la mesure de température à la fin de l'intervalle de confirmation est sensiblement la même que les deux mesures de température consécutives :

      enregistrer un premier temps d'arrêt,
      déterminer un temps écoulé depuis le premier temps de démarrage jusqu'à un premier temps d'arrêt,
      enregistrer ladite même mesure de température en tant que température stationnaire,
      interrompre la chauffe du brûleur pendant un intervalle d'interruption.

15. Système de chauffage à air forcé, comprenant :

  un brûleur (24) ;
  un échangeur de chaleur (22) ;
  une sortie d'air d'échangeur de chaleur ;
  un capteur de valeur d'énergie de l'espace (36) :

    un capteur de valeur d'énergie de l'échangeur de chaleur (18) ;
    une pompe de circulation d'air (16) ;

  et comprenant :

    des moyens de capteur (64) pour mesurer la température de sortie d'air d'un échangeur de chaleur (22) ;
    des moyens de circuit électronique (62) pour :

      enregistrer un premier temps de démarrage en une fois lorsque le brûleur fonctionne ;

surveiller les moyens de capteur ;
initialiser un intervalle de confirmation lorsque deux mesures de température consécutives de la pluralité sont sensiblement les mêmes ;
observer une mesure de température à la fin de l'intervalle de confirmation ;

si la mesure de température à la fin de l'intervalle de confirmation est sensiblement la même que les deux mesures de température consécutives :

  enregistrer un premier temps d'arrêt,
  déterminer un temps écoulé depuis le premier temps de démarrage jusqu'au premier temps d'arrêt,
  enregistrer ladite même mesure de température en tant que température stationnaire,
  interrompre la chauffe du brûleur pendant un intervalle d'interruption.

16. Système de chauffage selon la revendication 15, comprenant en outre le brûleur (24) contrôlé par des moyens de conduction à partir du capteur de valeur d'énergie de l'espace (36) ;
comprenant en outre :

  des moyens (38) pour détecter un signal provenant du capteur de valeur d'énergie d'espace (36) ; et
  une rupture commutée dans les moyens de conduction contrôlés par les moyens de circuit électronique (62).

17. Système de chauffage selon la revendication 15, dans lequel les moyens de détection de signal sont un appareil avec une large plage d'entrées de tension.

18. Système de chauffage selon la revendication 17, dans lequel la large plage d'entrées de tension est comprise entre 24 VAC et 240 VAC.

19. Système de chauffage selon la revendication 18, dans lequel les moyens de détection de signal comprennant un photo-coupleur (102).

20. Système de chauffage selon la revendication 15, dans lequel les moyens de circuit électronique comprennent un microprocesseur (100).

Fig. 1

EP 1 135 653 B1

13

TYPICAL FURNACE BURNER CIRCUIT

Fig. 2

EP 1 135 653 B1

Fig. 3

15

Fig. 4

EP 1 135 653 B1

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5248083 A